# EUROPÄISCHE PATENTANMELDUNG

(11) **EP 0 622 106 A1**
(43) Veröffentlichungstag der Anmeldung: **02.11.1994**
(21) Anmeldenummer: 94103488.6
(22) Anmeldetag: 08.03.1994
(51) Int. Cl.: B01D 53/36, C01B 17/88, B01D 53/34

(54) **Verfahren zur Reinigung von Oxide des Stickstoffs und Schwefels enthaltenden Rauchgasen aus Verbrennungsanlagen**

(30) Priorität: 28.04.1993 DE 4313897
(71) Anmelder: Degussa Aktiengesellschaft, D-60311 Frankfurt (DE)
(72) Erfinder: Blumrich, Stephan, D-63486 Bruchköbel (DE); Hofen, Willi, D-63517 Rodenbach (DE); Prescher, Günter, Dr., D-63457 Hanau (DE)

(57) **Zusammenfassung**

Die Erfindung betrifft eine vorteilhafte Weiterbildung eines Verfahrens zur Reinigung von Oxide des Stickstoffs und Schwefels enthaltenden Rauchgasen aus Verbrennungsanlagen durch selektive katalytische Reduktion der Stickoxide, nachfolgender katalytischer Oxidation von Schwefeldioxid mit Sauerstoff zu Schwefeltrioxid und Auswaschen des Schwefeltrioxids aus den Rauchgasen als wäßrige Schwefelsäure. Die erfindungsgemäße Weiterbildung betrifft die Aufkonzentration der wäßrigen Schwefelsäure auf über 95 gew.-%ige Schwefelsäure.

## Beschreibung

Die Erfindung betrifft eine vorteil hafte Weiterbildung eines Verfahrens zur Reinigung von Oxide des Stickstoffs und Schwefels enthaltenden Rauchgasen aus Verbrennungsanlagen durch selektive katalytische Reduktion der Stickoxide, nachfolgender katalytischer Oxidation von Schwefeldioxid mit Sauerstoff zu Schwefeltrioxid und Auswaschen des Schwefeltrioxids aus den Rauchgasen als wäßrige Schwefelsaure.

Ein solches gattungsgemäßes Verfahren wird zum Beispiel in der DE 36 01 378 beschrieben und ist in der Technik der Rauchgasreinigung als Desonox-Verfahren bekannt. In dem zweistufigen Desonox-Prozeß werden die Stickoxide in der ersten Stufe unter Zugabe eines gasförmigen Reduktionsmittels (zum Beispiel Ammoniak) in Gegenwart des im Rauchgas noch enthaltenen Sauerstoffs bei erhöhter Temperatur an einem Katalysator zu Stickstoff und Wasser konvertiert. Dieser Vorgang wird in der Technik als selektive katalytische Reduktion bezeichnet. In der unmittelbar anschließenden zweiten Stufe wird das noch Schwefeldioxid, Sauerstoff sowie gegebenenfalls Kohlenmonoxid und Kohlenwasserstoffe enthaltende Rauchgas über einen Oxidationskatalysator geleitet, an dem in hohen Ausbeuten Schwefeldioxid in Schwefeltrioxid konvertiert wird. Kohlenmonoxid, Kohlenwasserstoffe und gegebenenfalls das in der Reduktionsstufe nicht verbrauchte Reduktionsmittel werden gleichzeitig in Kohlendioxid, Stickstoff und Wasser überführt.

Nach Abkühlung der Rauchgase wird Schwefeltrioxid in einem ein- oder mehrstufigen Schwefelsäurewäscher durch Kontakt mit verdünnter Schwefelsaure hydratisiert und als möglichst hochprozentige wäßrige Schwefelsäure abgeschieden.

Die Rauchgastemperaturen in den beiden katalytischen Stufen liegen zwischen etwa 250 und 550° C. Sie müssen für die Hydration des Schwefeltrioxids auf 40 bis 130° C abgesenkt werden. Dies geschieht in einem Wärmetauscher unter gleichzeitiger Erwärmung der für die Verbrennungsanlage benötigten Frischluft auf Temperaturen bis 300° C.

Als Reduktionskatalysatoren können in diesen Verfahren grundsätzlich alle für die selektive Stickoxidreduktion geeigneten Katalysatoren eingesetzt werden. Beispiele hierfür sind Katalysatoren auf der Basis von Mischungen von Oxiden des Titans, Wolframs, Vanadins und Molybdäns (DE-PS 24 58 888, DE-PS 39 06 136) oder Katalysatoren, bestehend aus natürlichen oder synthetischen Aluminiumsilikaten, z. B. Zeolithe (DE-PS 38 41 990) oder Katalysatoren, die Edelmetalle der Platingruppe enthalten. Auch für die Oxidation des Schwefeldioxids lassen sich alle hierfür gebräuchlichen Katalysatorsysteme verwenden. Beispiele hierfür sind die in Gmelin, Handbuch der Anorg. Chemie, Band 9, Teil A, Seite 320 ff (1975) aufgeführten Systeme, z. B. Platin oder Vanadinpentoxid oder Eisenoxid enthaltende Katalysatoren sowie die in der DE-PS 40 18 324 beschriebenen Katalysatoren.

Ein besonderes Kennzeichen des gattungsgemäßen Rauchgasreinigungsverfahrens ist die Entfernung des in den Rauchgasen enthaltenen Schwefeldioxids in Form von Schwefelsäure, die als Wertstoff vermarktet werden kann.

Nachteilig dabei ist allerdings, daß die mit dem Desonox-Verfahren erzeugte Schwefelsäure nur eine Konzentration von etwa 70 bis 80 Gew.-% aufweist und daher keinen befriedigenden Marktpreis erzielen kann.

Aufgabe der vorliegenden Erfindung ist es deshalb, eine Weiterbildung des Desonox-Verfahrens zu schaffen, die eine bis auf mindestens 95 Gew.-% aufkonzentrierte Schwefelsäure liefert.

Diese Aufgabe wird durch ein gattungsgemäßes Verfahren gelöst, das dadurch gekennzeichnet ist, daß die 70 bis 80 gew.-%ige Schwefelsäure aus dem Schwefelsäurewäscher durch Gegenstrom-Desorption des Wassers mit einem heißen Gas auf mehr als 95 Gew.-% aufkonzentriert und das Abgas aus der Gegenstrom-Desorption ebenfalls dem Schwefelsäurewäscher zur Entfernung von Schwefelsäure-Aerosolen zugeführt wird.

Das für die Gegenstrom-Desorption benötigte heiße Gas kann dabei der durch den Wärmetauscher erwärmten Frischluft der Verbrennungsanlage als Teilstrom entnommen werden. Der für die Desorption benötigte Teilstrom macht nur etwa 5 % der insgesamt der Verbrennungsanlage zugeführten Frischluft aus. In einer anderen vorteilhaften Ausbildung des Verfahrens wird das für die Gegenstrom-Desorption benötigte heiße Gas dem Rauchgasstrom nach der Oxidationsstufe entnommen.

Die für die Gegenstrom-Desorption benötigte Desorptionskolonne kann z. B. als Füllkörpersäule mit 3 - 4 Trennstufen ausgeführt sein, aber auch jede andere geeignete Technik ist denkbar. In diese Desorptionskolonne wird die Schwefelsäure von oben eingedüst, so daß die Tröpfchen der Schwerkraft folgend nach unten in eine Art Sumpf gelangen.

Im unteren Bereich wird die heiße Frischluft oder das heiße Rauchgas eingeblasen und im Gegenstrom zur Schwefelsaure nach oben geleitet. Das in der Schwefelsäure enthaltene Wasser wird dadurch desorbiert und mit dem Luftstrom ausgetragen. Ein besonderer Vorteil des erfindungsgemäßen Verfahrens ist die sehr kostengünstige Einbindung dieser Aufkonzentrationsstufe in das Rauchgasreinigungsverfahren. Die Desorptionsluft wird entweder dem für die Verbrennungsanlage bestimmten Frischluftstrom oder dem Rauchgas entnommen. Die Abluft aus der Desorptionskolonne kann wieder dem Rauchgas zugeführt und mit dem Rauchgas gereinigt werden. Es sind also keine zusätzlichen Aufheiz-, Abkühl- oder Reinigungsapparate notwendig.

Als geeignet hat sich eine Temperatur des für die Desorption benötigten heißen Gases von ca. 150 bis 200° C erwiesen. Verwendet man für die Apparatekonstruktion der Desorptionskolonne hitzebeständige Materialien, so kann die zur Desorption des Wassers erforderliche Gaszufuhr auch bei höherer Temperatur erfolgen (z. B. 250 - 300° C). Allerdings werden dann auch größere Mengen Schwefelsäure-Aerosole mit der Abluft ausgetragen, die im Schwefelsäurewäscher wieder ausgewaschen werden müssen.

Je nach Temperaturniveau der angewärmten Frischluftmenge wird die zur Desorption notwendige Luftmenge entweder ganz oder teilweise dem angewärmten Frischluftstrom entnommen, der Rest kommt aus dem noch nicht angewärmten Frischluftstrom oder gegebenenfalls aus einer Druckluftstation. Über ein Regelventil können die beiden Luftströme so geregelt werden, daß eine stets konstante Desorptionslufttemperatur eingehalten werden kann. Anstelle der Frischluft kann auch Rauchgas mit entsprechendem Temperatur- und Druckniveau verwendet werden.

Die möglicherweise Schwefelsäure-Aerosole enthaltende Abluft aus der Desorptionskolonne wird dem Rauchgas vor dem Schwefelsäurewäscher zugeführt und im nachfolgenden Rauchgasweg gereinigt.

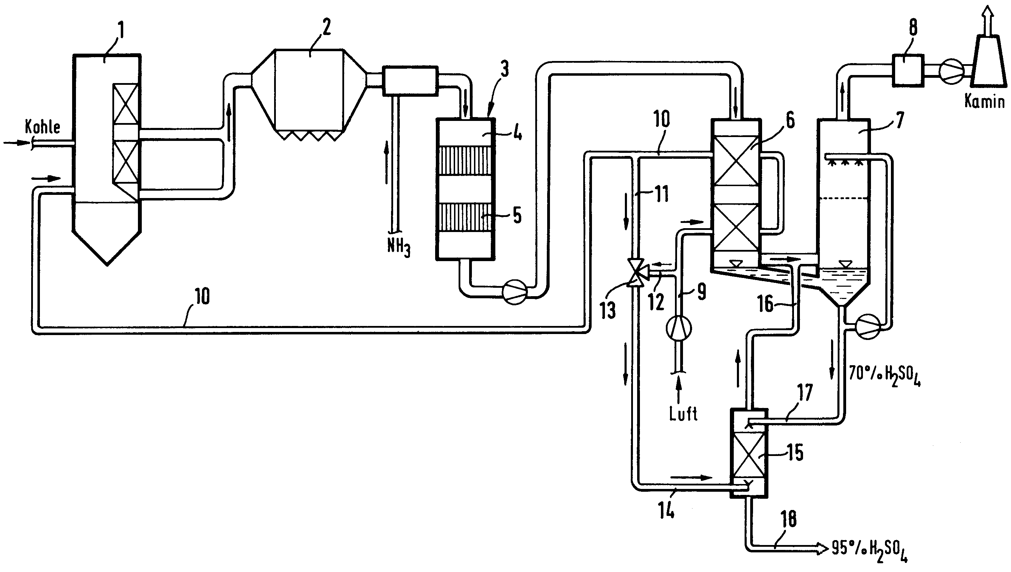

Figur 1 zeigt das Verfahrensschema eines Ausführungsbeispiels des erfindungsgemäßen Verfahrens. Die Bezugsziffern (1) bis (10) bezeichnen die Komponenten des schon aus dem Stand der Technik bekannten Desonox-Verfahrens:
(1) Verbrennungsanlage mit Dampferzeuger
(2) Elektrofilter zur Staubabscheidung
(3) Katalytischer Reaktor
(4) Reduktionskatalysator
(5) Oxidationskatalysator
(6) Wärmetauscher in Form eines Röhren-Luftvorwärmers
(7) Schwefelsäure-Wäscher
(8) Tropfenabscheider
(9) Frischluftzufuhr
(10) erwärmte Frischluft
Die Bezugsziffern (11) bis (18) kennzeichnen die gemäß der Erfindung für die Aufkonzentration der Schwefelsäure notwendigen Komponenten.

Die Frischluft der Verbrennungsanlage wird mit Hilfe eines Gebläses im Gegenstrom als Kühlmedium für das heiße Rauchgas durch den als Röhren-Luftvorwärmer ausgebildeten Wärmetauscher (6) gepreßt und erwärmt sich dabei bis auf ca. 300° C.

Von der erwärmten Frischluft (10) wird bei (11) ein Teilstrom als Desorptionsluft abgezweigt. Zur Einstellung der Desorptionstemperatur von etwa 200° C wird dem Desorptionsluftstrom bei (13) mit Hilfe eines temperaturgeregelten Mischers etwa 37 Vol.% nicht vorgewärmter Frischluft (12) zugemischt. Die so eingestellte Desorptionsluft gelangt von unten bei (14) in die Desorptionskolonne (15) und desorbiert im Gegenstrom das Wasser der etwa 70 gew.-%igen Schwefelsäure, die von oben bei (17) in die Desorptionskolonne eingesprüht wird. Die aufkonzentrierte, etwa 95 gew.-%ige Schwefelsäure wird am Boden der Desorptionskolonne abgezogen und in einem Produktionstank (18) zwischengelagert. Die Abluft der Desorptionskolonne wird bei (16) dem Rauchgasstrom zugemischt.

Zum Aufkonzentrieren von 70 gew.-%iger Schwefelsäure auf 95 gew.-%ige Schwefelsäure werden pro 100 kg 95 gew.-%iger Schwefelsäure 1200 m³/h i.N. Desorptionsluft von 200° C benötigt. Die Abluft der Desorptionskolonne (1260 m³/h i.N. pro 100 kg 95 gew.-%ige H₂SO₄) enthält ca. 5 Vol.% Wasser und 0,1 Vol. ppm Schwefelsäure. Die Temperatur der Abluft liegt bei 100° C. Sie kann entweder vor dem Wärmetauscher oder vor dem Schwefelsäure-Wäscher dem Rauchgas zugegeben werden. Die in den Produktionstank (18) ablaufende Schwefelsäure hat eine Konzentration von 95 Gew.-% bei einer Temperatur von 160° C. Sie ist weniger aggressiv als die 70 gew.-%ige Schwefelsäure. Damit können an den nachfolgenden Aggregaten Einsparungen durch geringere Anforderungen an die Materialqualität erzielt werden.

Die nachfolgende Tabelle zeigt einige Berechnungsbeispiele zur Aufkonzentrierung von Schwefelsäure mit verschiedenen Konzentrationen im erfindungsgemäßen Verfahren.

| Beisp.-Nr. | 1 | 2 | 3 | 4 |
|---|---|---|---|---|
| von H₂SO₄-Konz.: | 70 Gew.-% | 60 Gew.-% | 40 Gew.-% | 40 Gew.-% |
| auf H₂SO₄-Konz.: | 95 Gew.-% | 96,5 Gew.-% | 95,5 Gew.-% | 95,5 Gew.-% |
| Zulufttemp.: | 200° C | 200° C | 200° C | 250° C |
| Zuluftmenge: | 12 m³/kg | 13,2 m³/kg | 19,7 m³/kg | 14,5 m³/kg |
| H₂SO₄-Temp.: | 160° C | 172² C | 167° C | 190° C |
| Ablufttemp.: | 100° C | 86° C | 70° C | 73° C |
| Bemerkung: | 1-stufig | 1-stufig | 2-stufig | 2-stufig |

Die Schwefelsäure kann also auch aus verdünnteren Lösungen, z. B. 40 Gew.-%, auf 95 % aufkonzentriert werden. Dies ist zwar ein eher theoretischer Fall, belegt jedoch die breite Anwendbarkeit des Verfahrens. Nachteilig ist hierbei der stark ansteigende Aufwand, bis hin zu einer zweistufigen Aufteilung der Kolonne mit separater Luftzuspeisung der Kolonnen.

## Patentansprüche

1. Verfahren zur Reinigung von Oxide des Stickstoffs und Schwefels enthaltenden Rauchgasen aus Verbrennungsanlagen in einem Zweistufenprozeß durch selektive katalytische Reduktion der Stickoxide in der ersten Stufe unter Zugabe eines Reduktionsmittels mit nachfolgender katalytischer Oxidation von im Rauchgas noch enthaltenem Kohlenmonoxid, von Kohlenwasserstoffen und gegebenenfalls des in der Reduktionsstufe nicht verbrauchten Reduktionsmittels zu Stickstoff, Wasser und Kohlendioxid sowie Oxidation des im Rauchgas enthaltenen Schwefeldioxids zu Schwefeltrioxid in der zweiten Stufe bei Temperaturen von 250 bis 550° C; Abkühlung des so behandelten Rauchgases in einem Wärmetauscher auf 110 bis 140° C bei gleichzeitiger Erwärmung der Frischluft der Verbrennungsanlage auf Temperaturen von 140 bis 300° C und Hydration des Schwefeltrioxids in einem ein- oder mehrstufigen Schwefelsäurewäscher mit wäßriger Schwefelsäure bei Temperaturen von 40 bis 130° C zu 70 bis 80 gew.-%iger Schwefelsäure,
**dadurch gekennzeichnet**,
daß die so erhaltene 70 bis 80 gew.-%ige Schwefelsäure durch Gegenstrom-Desorption des Wassers mit einem heißen Gas auf mehr als 95 Gew.-% aufkonzentriert und das Abgas aus der Gegenstrom-Desorption ebenfalls dem Schwefelsäurewascher zur Entfernung von Schwefelsäure-Aerosolen zugeführt wird.

2. Verfahren nach Anspruch 1,
**dadurch gekennzeichnet**,
daß das für die Gegenstrom-Desorption benötigte heiße Gas der erwärmten Frischluft der Verbrennungsanlage entnommen wird.

3. Verfahren nach Anspruch 1,
**dadurch gekennzeichnet**,
daß das für die Gegenstrom-Desorption benötigte heiße Gas dem Rauchgasstrom nach der Oxidationsstufe entnommen wird.

4. Verfahren nach den Ansprüchen 2 oder 3,
**dadurch gekennzeichnet**,
daß die Temperatur des für die Gegenstrom-Desorption benötigten heißen Gases durch Zumischen von Frischluft auf einen Wert im Bereich zwischen 150 und 250° C eingestellt wird.
